# EUROPEAN PATENT SPECIFICATION

(11) **EP 3 609 343 B1**
(45) Date of publication and mention of the grant of the patent: **31.03.2021**
(21) Application number: 18704031.6
(22) Date of filing: 14.02.2018
(51) Int. Cl.: A23G 9/28

(54) **CONTAINER FOR FROZEN CONFECTIONS**
BEHÄLTER FÜR GEFRORENE SÜSSWAREN
RÉCIPIENT DESTINÉ À DES CONFISERIES GLACÉES

(30) Priority: 11.04.2017 EP 17165995
(43) Date of publication of application: 19.02.2020
(73) Proprietor: Unilever IP Holdings B.V., 3013 AL Rotterdam (NL)
(72) Inventor: D'AGOSTINO, Tommaso, Bedford Bedfordshire MK44 1LQ (GB)
(74) Representative: Askew, Sarah Elizabeth
(86) International application number: PCT/EP2018/053697
(87) International publication number: WO 2018/188835

(56) References cited:
- WO-A1-2006/128574
- WO-A1-2013/124193
- WO-A2-2008/074517
- Anonymous: "Solid and liquid silicone rubber-Product selection guide", Wacker , 19 March 2015 (2015-03-19), page 16PP, XP002772821, Retrieved from the Internet: URL:https://www.wacker.com/cms/media/publi cations/downloads/6858_EN.pdf [retrieved on 2017-08-08]

## Description

### Technical field

This invention relates to a container from which frozen confections, such as soft ice cream can be dispensed. The invention also relates to a method and apparatus for dispensing frozen confections from the container.

### Background

Soft ice cream is normally dispensed at the point of sale from a soft serve ice cream machine, i.e. a semi-continuous, pressurised scraped surface heat exchanger in which a pre-packaged mix is frozen and aerated. It is typically dispensed at temperatures of -4 to - 8 °C, for example into a cone, and is then immediately consumed. It is liked by many consumers because of its texture, which is softer than that of ice cream served by scooping from a container kept in a freezer cabinet at around -18 °C. Soft serve ice cream machines have a number of disadvantages: they are large and expensive, require training to operate, consume considerable energy, do not deliver consistent product quality if used over a period of time and are inconvenient for the operator to dismantle and clean. Each machine can also only offer one type of product (e.g. flavour/ice cream/sorbet etc) at a time - separate freezer barrels are required for different products.

In recent years, systems for dispensing frozen confections such as soft ice cream have been developed in which pre-packaged ice cream is delivered from a container by a dispensing device. In particular systems which employ bag-in-bottle type containers have been developed.

WO 2013/124193 A discloses a method for dispensing a frozen confection comprising: providing a refrigerated, insulated chamber, which houses at least one container, containing a frozen confection at a temperature of -12 °C or below; wherein the at least one container has an outlet which is closed by a self-closing valve; wherein the container comprises flexible bag containing the frozen confection located inside a bottle; pressurising gas in the region inside the bottle and outside the flexible bag thereby applying pressure to the frozen confection so that the valve opens and the frozen confection is forced out of the container through the outlet; releasing the pressure so that the valve closes.

The present inventors have identified that there are opportunities to enhance the dispensing performance of frozen confections by improving dispensing speed and/or reducing residue in the container. After careful investigation, the present inventors surprisingly found that by providing specific properties to the valve, one or more of these advantages can be achieved.

### Brief description of the invention

Accordingly, in a first aspect, the present invention provides a container suitable for containing a frozen confection, the container comprising:
- a receptacle comprising a product outlet through which the frozen confection can be dispensed and wherein the outlet is closed by a self-closing valve;
- a flexible bag for containing the frozen confection and located inside the receptacle; and
- a propellant inlet through which pressurized gas can be introduced to a region inside the receptacle and outside of the bag to urge the frozen confection towards the product outlet;
wherein the self-closing valve is a slit valve made from a resilient material having a Shore hardness of 35 to 45 as determined on the A scale.

The present inventors have found that by forming the valve from a resilient material that is soft (i.e. Shore hardness of less than 50 on the A scale), more complete dispensing of frozen confections from the containers can be achieved and/or higher flow rates can be achieved. Additionally or alternatively, use of a resilient material that is soft may result in the final portion of frozen confection that is dispensed from the container having a more pleasing shape (thicker stream of ice cream). The Shore hardness is no more than 45 on the A scale.

If the valve becomes too soft, the inventors have found that the "fluted" shape desired of dispensed confections can be compromised. Thus the Shore hardness is greater than 35 on the A scale.

Dispensing speed and/or fluted shape definition are found to be enhanced if larger outlet sizes are used. In particular it is preferred that the self-closing valve closes an outlet orifice of the product outlet wherein the outlet orifice has a diameter of no less than 1 cm, more preferably no less than 2 cm. The outlet orifice preferably has a diameter of no greater than 6 cm, more preferably no greater than 4 cm, in order that the stream of dispensed confection does not become too large to be held by conventional ice cream cones and the like.

The frozen confection contained in the flexible bag is preferably a frozen aerated confection, more preferably the frozen confection is ice cream.

In a further aspect, the invention provides a method for dispensing a frozen confection, the method comprising:
(i) providing a chamber, which houses at least one container according to any embodiment of the first aspect and wherein the container comprises a frozen confection at a temperature of -12 degrees C or below;
(ii) introducing pressurized gas through the propellant inlet and into the region inside the receptacle and outside the flexible bag thereby applying pressure to the frozen confection so that the valve opens and the frozen confection is forced out of the container through the outlet.

In a still further aspect, the present invention provides an apparatus for dispensing a frozen confection, the apparatus comprising:
- a chamber, which houses at least one container according to any embodiment of the first aspect and containing a frozen confection ;
- a compressed gas source in fluid communication with the propellant inlet and arranged to pressurize gas in the region inside the bottle and outside the flexible bag thereby applying pressure to the frozen confection so that the valve opens and the frozen confection is forced out of the container through the outlet.

Preferably the chamber is refrigerated and insulated. For example the apparatus may comprise a refrigeration system which cools air which is circulated around the container in the chamber. Preferably the interior of the chamber is maintained at a temperature below - 12 °C, more preferably at a temperature from -15 to -22 °C.

Because of the high viscosity of frozen confections, very high pressures are needed for dispensing. Typically the pressurized gas is introduced to the region inside the receptacle and outside of the bag at a pressure of at least 0.5 bar, more preferably at a pressure of from 0.8 to 5 bar and most preferably from 1 to 3 bar. References herein to pressure are to gauge pressure, i.e., pressure above atmospheric pressure.

As the present invention employs a self-closing valve, it is particularly advantageous wherein multiple portions of frozen confection are dispensed from the container and the pressure of the pressurized gas is released between dispensing each portion. Preferably the valve closes when the pressure of the pressurized gas is released.

Additionally or alternatively the pressure may be varied during dispensing as described, for example, in WO 2013/124193, the disclosure of which is hereby incorporated by reference in its entirety.

### Detailed description

The present invention will now be described with reference to the figures, wherein:
Figure 1 shows an apparatus according to the invention.
Figure 2 shows a side view, partly in section, of a container of the invention which is self-standing.
Figure 3 shows a plan view of the outlet of the container of Fig. 2.

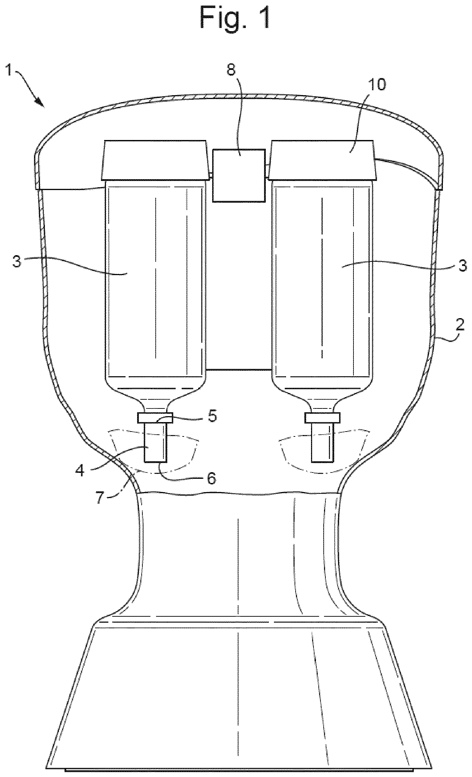

Figure 1 shows an apparatus according to the invention. The apparatus 1 comprises a dispenser having an insulated chamber **2,** which houses one or more containers **3** of a frozen confection such as ice cream. In the embodiment shown in Figure 1 there are two such containers. A refrigeration system **8** cools the chamber and its contents to a temperature of -12 °C or below. The refrigeration system is typically a conventional system, having a compressor, cooling coils and a fan for circulating the cooled air. The refrigeration system is designed to allow cold air to flow around the container in the insulated chamber, in order to keep the ice cream at the correct temperature (e.g. -18 °C). The apparatus also comprises a compressed air supply (not shown in Figure 1) which supplies pressurized air to each container via a gas outlet **10** which is in gas-tight engagement with the propellant inlet **11** in the base **9** of the respective container.

The insulated chamber **2** is a chamber having insulated walls which preferably comprise a heat insulating material having a thermal conductivity in the range of 0.5 to 50 mWm⁻¹K⁻¹. The insulated walls may be constructed from an insulating material encased between sheets of a material such as fibreglass, metal or plastic. The insulating material can be, for example, a closed cell foam structure such as expanded polystyrene; foam rubber, such as elastomeric nitrile rubber insulation (which has a thermal conductivity of around 30 mW m⁻¹K⁻¹); rigid foams, such as polyurethane; a fibrous material, such as fibreglass; a vacuum sealed within a double walled container; or vacuum insulated panels, which are typically made of an open cell foam or granular structure which is enveloped and hermetically sealed into a gas-impervious film under very low pressure. These panels have a thermal conductivity of around 5 to 10 mW m⁻¹ K⁻¹. Different insulating materials can be used to construct different parts of the container. The walls are usually 5 - 50 mm thick, typically about 25 to 50 mm.

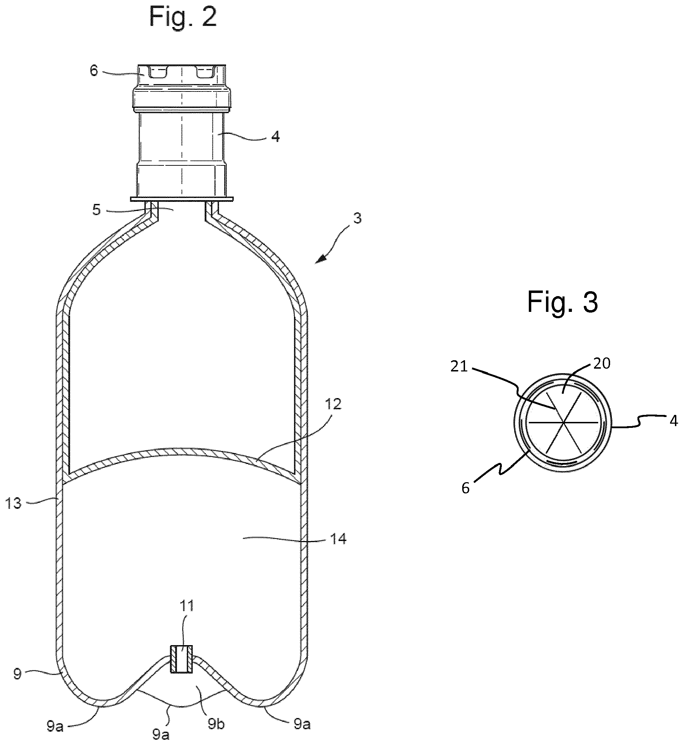

The containers **3** are "bag in bottle" containers, where the frozen confection is located in a flexible bag inside a more rigid receptacle (the bottle). WO 07 / 039158 describes an example of this type of container. Details of a container according to a preferred embodiment of the present invention can be seen in Figures 2 and 3.

The containers **3** comprises a bottle **13** having a substantially hollow cylindrical body extending from a product outlet **5** at the top end to a petalloid-shaped base **9.** The propellant inlet **11** is in the centre of the base **9.** Within the bottle **13** is a flexible bag **12** which in a filled state contains the frozen confection.

The base **9** of the bottle **13** is formed from a number (for example 2 to 6, more preferably 3 to 5) petaloid feet **9a** which extend radially outwards from a central recessed area **9b** surrounding the propellant inlet **11.** Valleys also extend radially outward from the central region **9b** with each valley separating adjacent pairs of petaloid feet **9a.**

When stored (for example in a freezer cabinet), the containers shown in Figures 1 to 3 can conveniently stand on the petaloid feet in a self-supporting manner.

In use the containers are loaded into the apparatus in an inverted configuration as shown in Figure 1. The gas outlet **10** is preferably shaped with recesses for receiving the petaloid feet **9a** and a projecting region for being received by the central region **9b** surrounding the propellant inlet **11.** This allows for efficient mating of the gas outlet **10** with the container base **9** such that good sealing can be achieved between the gas outlet **10** and propellant inlet **11.**

The pressure is applied to the frozen confection by increasing the pressure of the gas in the region **14** outside the bag **12** but inside the bottle **13.** In this way pressure is applied over a large surface area of the bag which contains the frozen confection, so that the force on the frozen confection is substantially directed towards the outlet of the bag, which communicates with the outlet of the bottle **5.** This has the effect that gagging of the bag in the outlet is avoided so very little frozen confection is wasted by becoming trapped as the bag empties. Moreover the air pressure can be increased gently and with a high degree of control so as to obtain a good flow, in comparison to applying pressure to ice cream in a cartridge by means of a piston. Since air is compressible it acts as a cushion. This provides very good control over the dispensing rate, compared for example to a system wherein pressure is applied to the frozen confection by means of a piston. The external source of compressed air which supplies the pressure in the embodiment illustrated in Figure 1 may comprise a pump and / or buffer tank. When the pressure is released after dispensing a portion of ice cream, the bag is able to expand back into the free space inside the bottle. The pressure may be decreased in a controlled manner or simply released quickly.

A nozzle **4** is attached to each container. The inner end of the nozzle is connected to the outlet **5** of the container **3** and in use is located inside the insulated chamber **2.** The outer end **6** of the nozzle is located outside the insulated chamber. A cap **7** can move between a closed position, wherein the outer end of the nozzle is enclosed between the cap and the outside of the chamber, and an open position which allows external access to the outer end of the nozzle. In Figure 1 the cap is shown in the closed position, thus enclosing a region around the outer end of the nozzle. The cap **7** is designed to minimise heat ingress into this region. Preferably the inside of the cap comprises a layer of insulating material and has a gasket (e.g. made from silicone) which seals the cap against the outside of the chamber when the cap is in the closed position and therefore prevents air flow into the enclosed region around the end of the nozzle, thus keeping it cold.

A self-closing valve **20** is formed in the outer end **6** of the nozzle from a slit valve. The slit valve covers the orifice of the outer end **6,** which has a diameter of about 3.5 cm. The slit valve is formed from a piece of resilient material (such as silicone rubber) which has two or more slits **21** which cross each other. The valve **20** shown in Figure 3 comprises 3 slits **21.** The resilient nature of the material has the result that a threshold pressure is required to open the slits, allowing the frozen confection to flow out. Once the pressure is returned to ambient, the valve closes itself in a self-sealing manner. Thus the valve forms a ventricle which opens under the pressure of the frozen confection pushing against it when pressure is exerted by the gas inside the bottle on the frozen confection inside the flexible bag. Similarly, the valve closes and cuts the stream of frozen confection when the pressure is released.

Surprisingly the inventors have found that the self-closing nature of the valve can be maintained even when soft material is used. The material (e.g. Eastosil® LR 3003/40 silicone rubber supplied by Wacker Chemie AG, Munich, Germany) is soft such that it has a Shore hardness of less than 50 on the A scale (for example a hardness of about 40 on the A scale). Shore hardness can be measured on a range of scales. The value of the hardness depends on the type of durometer used and those quoted herein are determined on the A scale using the DIN 53505 standard. Current commercial containers which are sold under the My Cornetto® brand of soft ice cream employ self-closing valves made from a resilient material having a Shore hardness of 50 on the A scale.

The inventors have found that not only can the self-closing nature of the valve be maintained with the soft material of the present invention but that use of such material has certain advantages, particularly in respect to more complete emptying of the bottle and/or increased flow rate at low temperatures and/or providing a final dispensed portion with a more robust shape. On the other hand using material with a Shore hardness that is greater than 30 is important to ensure that the dispensed frozen confection has a defined, preferably "fluted", shape.

Preferably the valve and surrounding area is kept at a temperature of below -13 °C. Whilst, for microbiological reasons it would be expected that the valve should be kept at a temperature of no higher than -6 °C, we have further found that by keeping the frozen confection in the container adjacent to the valve at a lower temperature than would have been thought necessary, then the combination of the solid-like nature of the ice cream and the self-closing valve prevents drips of ice cream from leaking. Thus the self-closing valve is sufficient in itself both to regulate the flow of ice cream during dispensing, and also to close the container and thus prevent any leaks between dispensing operations.

The required temperature can be achieved for example by having the cap 7 which covers the valve and the end of the container between dispensing operations. Preferably cold air from the chamber which houses the container is circulated around the valve in the space enclosed by the cap.

The means for applying pressure to the frozen confection preferably allows the operator to vary the applied pressure (for example the pressure applied is determined by the extent to which an operating lever is pulled by the operator as with a "beer tap"). This gives good control over the rate of dispensing of the frozen confection, which results in products that have an attractive appearance.

All numbers in this description indicating amounts of material, time periods, length scales, conditions of reaction, physical properties of materials and/or use may optionally be understood as modified by the word "about".

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention (for example a method of the invention), such disclosure is also to be considered to apply to any other aspect of the invention (for example an apparatus of the invention) *mutatis mutandis.*

### Example

Ice cream was prepared and filled into bag-in-bottle containers and dispensed as described in the Examples of WO 2013/124193. The containers were fitted with slit valves that were identical except for the material from which the valves were formed. The materials used were Elastosil® LR 3003 silicone rubbers with a Shore hardness of 30, 40 or 50 on the A scale.

Initial tests with the containers having valves of material with a Shore hardness of 30 showed that the dispensed ice cream had an unacceptable ill-defined appearance and so no further tests were performed with these containers.

Containers fitted with the 40 or 50 hardness valves were equilibrated at a temperature of -21 °C and then the ice cream dispensed therefrom. The containers fitted with the valves having a hardness of 40 had a flow rate in excess of 200 g / 5 s whilst the ones with 50 hardness valves had a flow rate below 200 g / 5 s. Moreover the amount of leftover (waste) ice cream in the bottles with the 40 hardness valve was below 150 g whilst that for the bottles with the 50 harness valve was above 150 g. Furthermore, the final portion dispensable from the containers having the 40 hardness valve were dispensed as a thicker, more robust stream of ice cream than the final portion dispensable from the containers with the 50 hardness valves.

## Claims

1. A container (3) suitable for containing a frozen confection, the container (3) comprising:
- a receptacle (13) comprising a product outlet (5) through which the frozen confection can be dispensed and wherein the outlet (5) is closed by a self-closing valve (20);
- a flexible bag (12) for containing the frozen confection and located inside the receptacle (13); and
- a propellant inlet (11) through which pressurized gas can be introduced to a region (14) inside the receptacle (13) and outside of the bag (12) to urge the frozen confection towards the product outlet (5);
wherein the self-closing valve (20) is a slit valve made from a resilient material having a Shore hardness of 35 to 45 as determined on the A scale.

2. The container as claimed in claim 1 wherein the self-closing valve (12) closes an outlet orifice of the product outlet and wherein the outlet orifice has a diameter of from 1 to 6 cm.

3. The container as claimed in claim 2 wherein the outlet orifice has a diameter of from 2 to 4 cm.

4. The container as claimed in any one of claims 1 to 3 wherein the flexible bag (12) contains a frozen confection.

5. A method for dispensing a frozen confection, the method comprising:
(i) providing a chamber (2), which houses at least one container (3) as claimed in claim 4 wherein the frozen confection is at a temperature of -12 degrees C or below;
(ii) introducing pressurized gas through the propellant inlet (11) and into the region (14) inside the receptacle (13) and outside the flexible bag (12) thereby applying pressure to the frozen confection so that the valve (20) opens and the frozen confection is forced out of the container through the outlet (5).

6. The method as claimed in claim 5 and comprising the additional step of (iii) releasing the pressure so that the valve closes.

7. The method as claimed in claim 5 or claim 6 wherein the pressure applied to the frozen confection is varied by the operator during dispensing.

8. An apparatus (1) for dispensing a frozen confection, the apparatus comprising:
- a chamber (2), which houses at least one container (3) as claimed in claim 4;
- a compressed gas source in fluid communication with the propellant inlet (11) and arranged to pressurize gas in the region (14) inside the bottle (13) and outside the flexible bag (12) thereby applying pressure to the frozen confection so that the valve (20) opens and the frozen confection is forced out of the container through the outlet (5).

9. The apparatus as claimed in claim 8 wherein the pressurized gas source allows the operator to vary the applied pressure during dispensing.

## Patentansprüche

1. Behälter (3), der geeignet ist, ein gefrorenes Konfekt zu enthalten, wobei der Behälter (3) umfasst:
- einen Aufnahmebehälter (13), der einen Produktauslass (5) umfasst, durch den das gefrorene Konfekt abgegeben werden kann, und wobei der Auslass (5) durch ein Selbstschlussventil (20) verschlossen ist;
- einen flexiblen Beutel (12) zur Aufnahme des gefrorenen Konfekts, der innerhalb des Aufnahmebehälters (13) angeordnet ist; und
- einen Treibmitteleinlass (11), durch den Druckgas in einen Bereich (14) innerhalb des Aufnahmebehälters (13) und außerhalb des Beutels (12) eingeleitet werden kann, um das gefrorene Konfekt in Richtung des Produktauslasses (5) zu treiben;
wobei das Selbstschlussventil (20) ein Schlitzventil aus einem elastischen Material mit einer Shore-Härte von 35 bis 45, wie auf der A-Skala bestimmt, ist.

2. Behälter wie in Anspruch 1 beansprucht, wobei das Selbstschlussventil (12) eine Auslassöffnung des Produktauslasses schließt und wobei die Auslassöffnung einen Durchmesser von 1 bis 6 cm aufweist.

3. Behälter wie in Anspruch 2 beansprucht, wobei die Auslassöffnung einen Durchmesser von 2 bis 4 cm aufweist.

4. Behälter wie in irgendeinem der Ansprüche 1 bis 3 beansprucht, wobei der flexible Beutel (12) ein gefrorenes Konfekt enthält.

5. Verfahren zum Abgeben eines gefrorenen Konfekts, wobei das Verfahren umfasst:
(i) Bereitstellen einer Kammer (2), in der mindestens ein Behälter (3) wie in Anspruch 4 beansprucht untergebracht ist, wobei das gefrorene Konfekt bei einer Temperatur von -12 Grad C oder darunter ist;
(ii) Einleiten von Druckgas durch den Treibmitteleinlass (11) und in den Bereich (14) innerhalb des Auffangbehälters (13) und außerhalb des flexiblen Beutels (12), wodurch Druck auf das gefrorene Konfekt ausgeübt wird, so dass sich das Ventil (20) öffnet und das gefrorene Konfekt durch den Auslass (5) aus dem Behälter gedrückt wird.

6. Verfahren wie in Anspruch 5 beansprucht und umfassend den zusätzlichen Schritt (iii) des Ablassens des Drucks, so dass das Ventil schließt.

7. Verfahren wie in Anspruch 5 oder Anspruch 6 beansprucht, wobei der auf das gefrorene Konfekt ausgeübte Druck vom Bediener während der Abgabe variiert wird.

8. Vorrichtung (1) zum Abgeben eines gefrorenen Konfekts, wobei die Vorrichtung umfasst:
- eine Kammer (2), in der mindestens ein Behälter (3) wie in Anspruch 4 beansprucht untergebracht ist;
- eine Druckgasquelle in Fluidverbindung mit dem Treibmitteleinlass (11) und angeordnet, um Gas in dem Bereich (14) innerhalb der Flasche (13) und außerhalb des flexiblen Beutels (12) unter Druck zu setzen, wodurch Druck auf das gefrorene Konfekt ausgeübt wird, so dass sich das Ventil (12) öffnet und das gefrorene Konfekt aus dem Behälter durch den Auslass (5) herausgedrückt wird.

9. Vorrichtung wie in Anspruch 8 beansprucht, wobei die Druckgasquelle es dem Bediener ermöglicht, den angelegten Druck während der Abgabe zu variieren.

## Revendications

1. Récipient (3) approprié pour contenir une confiserie glacée, le récipient (3) comprenant :
- un réceptacle (13) comprenant une sortie de produit (5) à travers laquelle la confiserie glacée peut être distribuée et dans lequel la sortie (5) est fermée par une valve à fermeture automatique (20) ;
- un sac flexible (12) pour contenir la confiserie glacée et disposé à l'intérieur du réceptacle (13) ; et
- une entrée de gaz propulseur (11) à travers laquelle du gaz pressurisé peut être introduit dans une région (14) à l'intérieur du réceptacle (13) et à l'extérieur du sac (12) pour pousser la confiserie glacée vers la sortie de produit (5) ;
dans lequel la valve à fermeture automatique (20) est une valve à fente constituée d'un matériau résilient ayant une dureté Shore de 35 à 45 comme déterminée sur l'échelle A.

2. Récipient selon la revendication 1, dans lequel la valve à fermeture automatique (12) ferme un orifice de sortie de la sortie de produit et dans lequel l'orifice de sortie présente un diamètre de 1 à 6 cm.

3. Récipient selon la revendication 2, dans lequel l'orifice de sortie présente un diamètre de 2 à 4 cm.

4. Récipient selon l'une quelconque des revendications 1 à 3, dans lequel le sac flexible (12) contient une confiserie glacée.

5. Procédé pour distribuer une confiserie glacée, le procédé comprenant :
(i) la fourniture d'une chambre (2), qui loge au moins un récipient (3) selon la revendication 4 dans lequel la confiserie glacée est à une température de -12 degrés C ou inférieure ;
(ii) l'introduction de gaz pressurisé à travers l'entrée de gaz propulseur (11) et dans la région (14) à l'intérieur du réceptacle (13) et à l'extérieur du sac flexible (12) appliquant par là une pression à la confiserie glacée de sorte que la valve (20) s'ouvre et la confiserie glacée est forcée à l'extérieur du récipient à travers la sortie (5).

6. Procédé selon la revendication 5 et comprenant l'étape supplémentaire de (iii) libération de la pression de sorte que la valve se ferme.

7. Procédé selon la revendication 5 ou revendication 6, dans lequel la pression appliquée à la confiserie glacée est modifiée par l'opérateur pendant la distribution.

8. Appareil (1) pour distribuer une confiserie glacée, l'appareil comprenant :
- une chambre (2), qui loge au moins un récipient (3) selon la revendication 4 ;
- une source de gaz comprimé en communication fluide avec l'entrée de gaz propulseur (11) et disposée pour pressuriser du gaz dans la région (14) à l'intérieur de la bouteille (13) et à l'extérieur du sac flexible (12) appliquant par là une pression à la confiserie glacée de sorte que la valve (20) s'ouvre et la confiserie glacée est forcée à l'extérieur du récipient à travers la sortie (5).

9. Appareil selon la revendication 8, dans lequel la source de gaz pressurisé permet à l'opérateur de modifier la pression appliquée pendant la distribution.
